# EUROPEAN PATENT SPECIFICATION

(11) **EP 4 325 600 B1**
(45) Date of publication and mention of the grant of the patent: **14.01.2026**
(21) Application number: 22876733.1
(22) Date of filing: 19.09.2022
(51) Int. Cl.: H01M 4/36, H01M 4/525, H01M 4/505, H01M 4/62, C01G 53/00, H01M 10/052

(54) **METHOD FOR MANUFACTURING CATHODE ACTIVE MATERIAL FOR LITHIUM SECONDARY BATTERY, AND CATHODE ACTIVE MATERIAL MANUFACTURED THEREBY**
VERFAHREN ZUR HERSTELLUNG EINES KATHODENAKTIVMATERIALS FÜR EINE LITHIUMSEKUNDÄRBATTERIE UND DAMIT HERGESTELLTES KATHODENAKTIVMATERIAL
PROCÉDÉ DE FABRICATION D'UN MATÉRIAU ACTIF DE CATHODE POUR BATTERIE SECONDAIRE AU LITHIUM, ET MATÉRIAU ACTIF DE CATHODE AINSI FABIRQUÉ

(30) Priority: 01.10.2021 KR 20210130713
(43) Date of publication of application: 21.02.2024
(73) Proprietor: LG Energy Solution, Ltd., Seoul 07335 (KR)
(72) Inventor: JUNG, Hae Jung, Daejeon 34122 (KR); JUNG, Wang Mo, Daejeon 34122 (KR); JO, Chi Ho, Daejeon 34122 (KR); YOO, Tae Gu, Daejeon 34122 (KR); HWANG, Jin Tae, Daejeon 34122 (KR); HEO, Jong Wook, Daejeon 34122 (KR); CHO, Hyeon Jin, Daejeon 34122 (KR)
(74) Representative: Hoffmann Eitle
(86) International application number: PCT/KR2022/013992
(87) International publication number: WO 2023/054959

(56) References cited:
- EP-A1- 4 075 547
- EP-A1- 4 404 298
- WO-A1-2015/186321
- WO-A1-2021/132761
- WO-A1-2021/154035
- KR-A- 20170 081 950
- KR-A- 20190 103 955
- KR-A- 20200 044 448
- KR-A- 20210 062 021
- KR-A- 20210 112 673

## Description

### TECHNICAL FIELD

The present invention relates to a method of preparing a positive electrode active material for a lithium secondary battery, a positive electrode active material prepared thereby, and a lithium secondary battery including the positive electrode active material.

### BACKGROUND ART

A lithium secondary battery is generally composed of a positive electrode, a negative electrode, a separator, and an electrolyte, and the positive electrode and the negative electrode respectively include active materials capable of intercalating and deintercalating lithium ions.

Lithium cobalt oxide (LiCoO₂), lithium nickel oxide (LiNiO₂), lithium manganese oxide (LiMnO₂ or LiMn₂O₄), or a lithium iron phosphate compound (LiFePO₄) has been used as a positive electrode active material of the lithium secondary battery. Among them, the lithium cobalt oxide has advantages of high operating voltage and excellent capacity characteristics, but is difficult to be commercially used in a large-capacity battery due to the high price and supply instability of cobalt as a raw material. Since the lithium nickel oxide has poor structural stability, it is difficult to achieve sufficient life characteristics. The lithium manganese oxide has excellent stability, but has a problem in that capacity characteristics are inferior. Accordingly, lithium composite transition metal oxides containing two or more types of transition metals have been developed to compensate for the problems of the lithium transition metal oxides containing Ni, Co, or Mn alone, and, among them, a lithium nickel cobalt manganese oxide containing Ni, Co, and Mn has been widely used in the field of electric vehicle batteries.

A conventional lithium nickel cobalt manganese oxide was generally in a form of a spherical secondary particle in which tens to hundreds of primary particles were aggregated. However, with respect to the lithium nickel cobalt manganese oxide in the form of a secondary particle in which many primary particles are aggregated as described above, there is a problem in that particle breakage, in which the primary particles fall off in a rolling process during preparation of the positive electrode, is likely to occur and cracks occur in the particles during charge and discharge. In a case in which the particle breakage or cracking of the positive electrode active material occurs, since a contact area with an electrolyte solution is increased, active material degradation and gas generation due to a side reaction with the electrolyte solution are increased, and, as a result, there is a problem in that life characteristics are degraded.

Also, demand for high-output and high-capacity batteries, such as batteries for electric vehicles, is recently increasing, and, accordingly, a nickel content in the positive electrode active material has tended to gradually increase. In a case in which the nickel content in the positive electrode active material increases, initial capacity characteristics improve, but, since a large amount of highly reactive Ni⁴⁺ ions are generated if charge and discharge are repeated, structural collapse of the positive electrode active material occurs, and, as a result, there is a problem in that degradation rate of the positive electrode active material is increased to degrade life characteristics.

EP 4 404 298 A1 concerns a one-body particle for cathode active materials including a core and a coating layer formed on at least a part of the core, wherein the coating layer contains Co and a structure-stabilizing element, the core is present as a non-aggregated primary particle, and the structure-stabilizing element has a bond dissociation energy (BDE) with oxygen (O) greater than a bond dissociation energy (BDE) of Co and oxygen (O), and a method of preparing a novel one-body powder containing the same.
EP 4 075 547 A1 describes a positive-electrode active material including a positive-electrode active material matrix and a coating layer, and the coating layer coats a surface of the positive-electrode active material matrix.

### DISCLOSURE OF THE INVENTION

### TECHNICAL PROBLEM

An aspect of the present invention provides a method of preparing a positive electrode active material which may suppress particle breakage and crack generation during electrode preparation and charge and discharge and has excellent stability and durability while containing a high nickel content.

Another aspect of the present invention provides a positive electrode active material which may contribute to the achievement of a lithium secondary battery with excellent initial charge and discharge capacity and excellent life characteristics and resistance characteristics at high temperatures.

### TECHNICAL SOLUTION

The present invention provides
a method of preparing a positive electrode active material for a lithium secondary battery which includes the steps of:
(1) mixing a lithium composite transition metal oxide in a form of a single particle or pseudo-single particle with a cobalt-containing raw material and performing a heat treatment to form a cobalt coating layer on a surface of the lithium composite transition metal oxide; and
(2) mixing the lithium composite transition metal oxide having the cobalt coating layer formed thereon with a boron-containing raw material and performing a heat treatment to form a boron coating layer on the cobalt coating layer, wherein the single particle is a particle composed of one primary particle, and the pseudo-single particle is a particle composed of a secondary particle in which 30 or less primary particles are aggregated, wherein the boron-containing raw material in step (2) is mixed in an amount of 0.03 wt% to 0.08 wt% based on a total amount of the lithium composite transition metal oxide having the cobalt coating layer formed thereon.

Also, the present invention provides a positive electrode active material for a lithium secondary battery which includes a lithium composite transition metal oxide in a form of a single particle or pseudo-single particle,
a cobalt coating layer formed on the lithium composite transition metal oxide, and
a boron coating layer formed on the cobalt coating layer, wherein the single particle is a particle composed of one primary particle, and the pseudo-single particle is a particle composed of a secondary particle in which 30 or less primary particles are aggregated, and wherein a molar concentration of boron in the boron coating layer is in a range of 300 ppm to 700 ppm based on the entire positive electrode active material.

Furthermore, the present invention provides a positive electrode including a positive electrode active material layer which includes the positive electrode active material for a lithium secondary battery according to the present invention.

Also, the present invention provides a lithium secondary battery including the positive electrode according to the present invention.

### ADVANTAGEOUS EFFECTS

In a method of preparing a positive electrode active material according to the present invention, since boron (B) coating is performed after cobalt (Co) coating is performed on a lithium composite transition metal oxide in a form of a single particle or pseudo-single particle, there are an effect of stabilizing a structure through a heat treatment at high temperature and an effect of increasing a capacity achievement rate according to a two-phase reaction.

Also, a positive electrode active material for a lithium secondary battery according to the present invention is advantageous for achieving a high-capacity battery due to a high nickel content, and has excellent surface stability and durability by including a Co coating layer and a B coating layer while having excellent particle strength due to the single particle or pseudo-single particle form.

Furthermore, a lithium secondary battery including the above positive electrode active material has high initial capacity, and has high capacity retention and low resistance increase rate according to charge and discharge.

### BRIEF DESCRIPTION OF THE DRAWINGS

FIG. 1 is the result of evaluating initial charge and discharge capacities of lithium secondary batteries in which positive electrode active materials of Example 1 and Comparative Examples 1 to 4 are used.
FIG. 2 is a graph illustrating differential capacities during initial charge of lithium secondary batteries in which the positive electrode active materials of Example 1 and Comparative Example 1 are used.
FIG. 3 is the result of evaluating life characteristics at a high temperature of lithium secondary batteries in which the positive electrode active materials of Example 1 and Comparative Examples 1 to 4 are used.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "primary particle" means a particle unit in which a grain boundary does not exist in appearance when observed by using a scanning electron microscope with a field of view of 5,000 times to 20,000 times. The expression "average particle diameter of the primary particle" means an arithmetic average value of particle diameters which is calculated after measuring the particle diameters of the primary particles observed in a scanning electron microscope image.

In the present invention, the expression "secondary particle" is a particle formed by aggregation of a plurality of primary particles. In the present invention, a secondary particle, in which 30 or less primary particles are aggregated, is referred to as a pseudo-single particle in order to distinguish it from a conventional secondary particle which is formed by aggregation of tens to hundreds of primary particles.

The expression "average particle diameter D₅₀" in the present invention means a particle size on the basis of 50% in a volume cumulative particle size distribution of lithium composite transition metal oxide powder or positive electrode active material powder, wherein, in a case in which the lithium composite transition metal oxide is a secondary particle, it means an average particle diameter of the secondary particle. The average particle diameter D₅₀ may be measured by using a laser diffraction method. For example, after dispersing the lithium composite transition metal oxide powder or positive electrode active material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter D₅₀ may then be measured by obtaining a particle size corresponding to 50% of cumulative amount of volume.

### Positive Electrode Active Material

Hereinafter, a method of preparing a positive electrode active material according to the present invention and a positive electrode active material prepared thereby will be described.

Since lithium composite transition metal oxide particles in the form of a single particle or pseudo-single particle have relatively larger primary particles and less interface, as a diffusion path for lithium ions, between the primary particles than conventional lithium composite transition metal oxide particles in the form of a secondary particle, lithium mobility is low, and, since the lithium composite transition metal oxide particles are prepared at a relatively high sintering temperature, a rock salt phase is formed on surfaces of the particles to increase surface resistance. Accordingly, in a case in which the lithium composite transition metal oxide particles in the form of a single particle or pseudo-single particle are used, there is a problem in that resistance is increased and output characteristics are degraded in comparison to a case where the conventional lithium composite transition metal oxide particles in the form of a secondary particle are used.

Thus, the present inventors have found that the above problem may be solved through sequential (2 step) coating of cobalt (Co) and boron (B), thereby leading to the completion of the present invention. Specifically, it was confirmed that stabilization of a structure of the lithium composite transition metal oxide may be promoted by performing a heat treatment at a high temperature during Co coating and a capacity achievement rate may be increased by a two phase reaction at a charging end during subsequent additional B coating.

The method of preparing a positive electrode active material for a lithium secondary battery of the present invention includes the following steps (1) and (2).
(1) mixing a lithium composite transition metal oxide in a form of a single particle or pseudo-single particle with a cobalt-containing raw material and performing a heat treatment to form a cobalt coating layer on a surface of the lithium composite transition metal oxide
(2) mixing the lithium composite transition metal oxide having the cobalt coating layer formed thereon with a boron-containing raw material and performing a heat treatment to form a boron coating layer on the cobalt coating layer

In the present invention, the single particle is a particle composed of one primary particle, and the pseudo-single particle is a particle composed of a secondary particle in which 30 or less primary particles are aggregated.

In an embodiment of the present invention, the cobalt-containing raw material in step (1) may be mixed in an amount of 1 wt% to 5 wt% based on a total amount of the lithium composite transition metal oxide, and may preferably be mixed in an amount of 2 wt% to 4 wt%. It is desirable that the cobalt-containing raw material is included in an amount of 5 wt% or less in terms of the fact that cost may be reduced by securing an amount of nickel (Ni) relative to the total amount of the lithium composite transition metal oxide above a certain level and reducing an amount of the expensive cobalt raw material used.

The cobalt-containing raw material may be at least one selected from Co₃O₄, Co(OH)₂, Co₂O₃, Co₃(PO₄)₂, CoF₃, Co(OCOCH₃)₂·4H₂O, Co(NO₃)·6H₂O, Co(SO₄)₂·7H₂O, and CoC₂O₄, may be preferably at least one selected from Co₃O₄ and Co(OH)₂, and may be more preferably Co(OH)₂.

In the present invention, the boron-containing raw material in step (2) is mixed in an amount of 0.03 wt% to 0.08 wt% based on a total amount of the lithium composite transition metal oxide having the cobalt coating layer formed thereon, and may preferably be mixed in an amount of 0.04 wt% to 0.06 wt%. It is desirable that the boron-containing raw material is included in an amount of 0.08 wt% or less in terms of the fact that an increase in resistance by the boron coating layer may be minimized.

The boron-containing raw material may be at least one selected from H₃BO₃, B₂O₃, B₄C, BF₃, (C₃H₇O)₃B, (C₆H₅O)₃B, [CH₃(CH₂)₃O]₃B, C₁₃H₁₉O₃, C₆H₅B(OH)₂, and B₂F₄, may be preferably at least one selected from H₃BO₃ and B₂O₃, and may be more preferably H₃BO₃.

In an embodiment of the present invention, the heat treatment of step (1) may be performed at 600°C to 800°C, preferably, 650°C to 750°C. Also, it is desirable that the heat treatment of step (1) is performed for 3 hours to 10 hours.

In an embodiment of the present invention, the heat treatment of step (2) may be performed at 250°C to 400°C, preferably, 280°C to 350°C. When the heat treatment temperature of step (2) is within the above range, it is desirable in terms of high reactivity of forming a Li-B-O phase. Also, it is desirable that the heat treatment of step (2) is performed for 3 hours to 10 hours.

In an embodiment of the present invention, the mixing of steps (1) and (2) may each be dry mixing in which mixing is performed without a solvent.

In an embodiment of the present invention, the lithium composite transition metal oxide may be represented by Formula 1 below.

[Formula 1] LiₐNi_{1-x-y}CoₓM1_{y}M2_{w}O₂

In Formula 1, 1.0≤a≤1.5, 0≤x≤0.2, 0≤y≤0.2, 0≤w≤0.1, and 0<x+y≤0.4,

M1 is at least one selected from the group consisting of Mn and Al, and

M2 is at least one selected from the group consisting of Ba, Ca, Zr, Ti, Mg, Ta, Nb, and Mo.

Specifically, x, y, and w of Formula 1 may satisfy 0.025≤x≤0.15, 0.025≤y≤0.15, 0≤w≤0.05, and 0.05≤x+y≤0.2, respectively, and may more specifically satisfy 0.025≤x≤ 0.10, 0.025≤y≤0.10, 0≤w≤0.05, and 0.05≤x+y≤0.15.

Particularly, the lithium composite transition metal oxide may be an ultra-high nickel material having a nickel content of 90 mol% or more, that is, satisfying 0<x+y≤0.1 in Formula 1. In this case, x, y, and w may satisfy 0≤x≤0.08, 0≤y≤0.08, and 0≤w≤0.05, respectively.

Also, the positive electrode active material of the present invention includes a lithium composite transition metal oxide in a form of a single particle or pseudo-single particle, a cobalt coating layer formed on the lithium composite transition metal oxide, and a boron coating layer formed on the cobalt coating layer, and may be prepared through the above-described preparation method.

In an embodiment of the present invention, the single particle is a particle composed of one primary particle, and the pseudo-single particle is a particle composed of a secondary particle in which 30 or less primary particles are aggregated, wherein the primary particle may have an average particle diameter (D₅₀) of 1 µm to 5 µm, preferably, 1 µm to 3 µm. Also, the secondary particle may have an average particle diameter (D₅₀) of 3 µm to 7 µm, preferably, 3 µm to 5 µm. When the average particle diameter (D₅₀) of the secondary particle is within the above range, it is desirable in terms of resistance, particle breakage, and rolling density.

In an embodiment of the present invention, a molar concentration of Co in the cobalt coating layer may be in a range of 10,000 ppm to 40,000 ppm, preferably, 15,000 ppm to 35,000 ppm based on the entire positive electrode active material.

In the present invention, a molar concentration of B in the boron coating layer is in a range of 300 ppm to 700 ppm, preferably, 400 ppm to 600 ppm based on the entire positive electrode active material.

In an embodiment of the present invention, the positive electrode active material may have an average particle diameter (D₅₀) of 3 µm to 10 µm, preferably, 3 µm to 5 µm.

The lithium composite transition metal oxide may be prepared by mixing a precursor and a lithium raw material and then sintering the mixture.

In this case, the precursor may be used by purchasing a commercially available precursor, or may be prepared according to a method of preparing a precursor which is known in the art.

For example, the precursor may be prepared by performing a co-precipitation reaction while adding a transition metal aqueous solution, an ammonium cationic complexing agent, and a basic compound to a reactor and stirring.

The transition metal aqueous solution may be prepared by dissolving transition metal-containing raw materials in a solvent such as water, and, for example, may be prepared by dissolving a nickel-containing raw material, a cobalt-containing raw material, a manganese-containing raw material, and/or an aluminum-containing raw material in water.

The transition metal-containing raw material may be acetic acid salts, carbonates, nitrates, sulfates, halides, sulfides, or oxides of transition metal.

Specifically, the nickel-containing raw material, for example, may be NiO, NiCO₃·2Ni(OH)₂·4H₂O, NiC₂O₂·2H₂O, Ni(NO₃)₂·6H₂O, NiSO₄, NiSO₄·6H₂O, a nickel halide, or a combination thereof.

The cobalt-containing raw material, for example, may be CoSO₄, Co(OCOCH₃)₂·4H₂O, Co(NO₃)₂·6H₂O, Co(SO₄)₂·7H₂O, or a combination thereof.

The manganese-containing raw material, for example, may be Mn₂O₃, MnO₂, Mn₃O₄, MnCO₃, Mn(NO₃)₂, MnSO₄·H₂O, manganese acetate, manganese halide, or a combination thereof.

The aluminum-containing raw material, for example, may be Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, aluminum halide, or a combination thereof. However, with respect to aluminum (Al), it may not be added to the transition metal aqueous solution, but may be added together with a lithium raw material in a sintering step to be described later.

In this case, an amount of each of the transition metal-containing raw materials added may be determined in consideration of a molar ratio of the transition metal in the positive electrode active material to be finally prepared.

The ammonium cationic complexing agent may include at least one compound selected from the group consisting of NH₄OH, (NH₄)₂SO₄, NH₄NO₃, NH₄Cl, CH₃COONH₄, and NH₄CO₃, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

The basic compound may be at least one compound selected from the group consisting of NaOH, KOH, and Ca(OH)₂, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

If the transition metal aqueous solution, the ammonium cationic complexing agent, and the basic compound are added to the reactor and stirred as described above, precursor particles in the form of a transition metal hydroxide are formed while the transition metals in the transition metal aqueous solution are co-precipitated.

In this case, the transition metal aqueous solution, the ammonium cationic complexing agent, and the basic compound are added in amounts such that a pH of a reaction solution is within a desired range.

If the precursor particles are formed by the above-described method, a precursor is obtained by separating the precursor particles from the reaction solution. For example, after separating the precursor from the reaction solution by filtering the reaction solution, the separated precursor may be washed and dried to obtain a precursor. In this case, a process, such as grinding and/or classification, may be performed, if necessary.

Next, the precursor and a lithium raw material are mixed and then sintered to prepare a lithium composite transition metal oxide. In this case, a M2 metal-containing raw material may be mixed together and sintered, if necessary.

As the lithium raw material, lithium-containing sulfates, nitrates, acetic acid salts, carbonates, oxalates, citrates, halides, hydroxides, or oxyhydroxides may be used, and, for example, Li₂CO₃, LiNO₃, LiNO₂, LiOH, LiOH. H₂O, LiH, LiF, LiCl, LiBr, LiI, CH₃COOLi, Li₂O, Li₂SO₄, CH₃COOLi, Li₃C₆H₅O₇, or a mixture thereof may be used.

The lithium raw material and the precursor may be mixed so that a molar ratio of Li:total metals in the precursor is in a range of 1:1 to 1.2:1, preferably, 1:1 to 1.1:1. When the mixing ratio of the lithium raw material and the metal in the precursor satisfies the above range, since a layered crystal structure of the lithium composite transition metal oxide is well developed, a positive electrode active material having excellent capacity characteristics and structural stability may be prepared.

The sintering is performed at a temperature at which a single particle or pseudo-single particle may be formed. In order to form the single particle or pseudo-single particle, the sintering must be performed at a temperature higher than that during preparation of conventional lithium composite transition metal oxide in the form of a secondary particle, and, for example, in a case in which a precursor composition is the same, the sintering must be performed at a temperature about 30°C to 100°C higher than that during the preparation of the conventional lithium composite transition metal oxide in the form of a secondary particle. The sintering temperature for forming the single particle or pseudo-single particle may vary depending on a metal composition in the precursor, for example, in a case in which a high-Ni NCM-based lithium composite transition metal oxide having a nickel (Ni) content of 80 mol% or more is formed into a single particle or pseudo-single particle, the sintering temperature may be in a range of about 800°C to about 950°C, preferably, about 850°C to about 920°C. When the sintering temperature satisfies the above range, a positive electrode active material having excellent electrochemical properties in the form of a single particle or pseudo-single particle may be prepared. In a case in which the sintering temperature is less than 800°C, a positive electrode active material in the form of a secondary particle is prepared, and, in a case in which the sintering temperature is greater than 950°C, since excessive sintering occurs, the layered crystal structure is not properly formed to deteriorate the electrochemical properties.

Also, the sintering may be performed for 5 hours to 35 hours in an oxygen atmosphere. In the present specification, the oxygen atmosphere means an atmosphere containing enough oxygen for sintering in addition to an air atmosphere. Particularly, it is desirable to perform the sintering in an atmosphere in which an oxygen partial pressure is higher than that of the air atmosphere.

Furthermore, during the preparation of the lithium composite transition metal oxide of the present invention, it is desirable not to perform a washing process after the sintering. Conventionally, it was common to perform a washing process after sintering to reduce an amount of lithium byproduct during the preparation of the high-Ni NCM-based lithium composite transition metal oxide having a nickel (Ni) content of 80 mol% or more. However, according to the research of the present inventors, in a case in which the washing process was performed during the preparation of the lithium composite transition metal oxide in the form of a single particle or pseudo-single particle, it was found that surface properties of the lithium composite transition metal oxide were deteriorated during the washing process to increase resistance. Thus, it is desirable that washing is not performed during the preparation of the lithium composite transition metal oxide of the present invention and residual lithium on the surface of the lithium composite transition metal oxide is allowed to be consumed in a coating layer formation process. In a case in which the positive electrode active material is prepared without washing the lithium composite transition metal oxide as described above, an increase in the resistance due to surface defects may be suppressed.

### Positive Electrode

Next, a positive electrode according to the present invention will be described.

The positive electrode according to the present invention includes a positive electrode active material layer including the positive electrode active material according to the present invention. Specifically, the positive electrode includes a positive electrode collector and a positive electrode active material layer which is disposed on the positive electrode collector and includes the positive electrode active material.

In the positive electrode, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a nonwoven fabric body, and the like.

Also, the positive electrode active material layer may include a conductive agent and a binder in addition to the above-described positive electrode active material.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon black such as acetylene black, Ketjen black, channel black, furnace black, lamp black, and thermal black; carbonbased materials such as carbon fibers and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the positive electrode active material layer.

The binder improves the adhesion between the positive electrode active material particles and the adhesion between the positive electrode active material and the positive electrode collector. Specific examples of the binder may be polyvinylidene fluoride (PVDF), polyvinylidene fluoridehexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

The positive electrode may be prepared according to a typical method of preparing a positive electrode. For example, after a positive electrode slurry is prepared by mixing the positive electrode active material, the binder, and/or the conductive agent in a solvent and is coated on the positive electrode collector, the positive electrode may be prepared by drying and rolling the coated positive electrode collector. In this case, types and amounts of the positive electrode active material, the binder, and the conductive agent are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have viscosity that may provide excellent thickness uniformity during the subsequent coating for the preparation of the positive electrode.

As another method, the positive electrode may be prepared by casting the positive electrode slurry on a separate support and then laminating a film separated from the support on the positive electrode collector.

### Lithium Secondary Battery

Next, a lithium secondary battery according to the present invention will be described.

The lithium secondary battery of the present invention includes the positive electrode according to the present invention. Specifically, the lithium secondary battery includes a positive electrode, a negative electrode disposed to face the positive electrode, a separator disposed between the positive electrode and the negative electrode, and an electrolyte, wherein the positive electrode is as described above. Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a nonwoven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used.

Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon black such as acetylene black, Ketjen black, channel black, furnace black, lamp black, and thermal black; carbonbased materials such as carbon fibers and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the negative electrode active material layer.

The binder improves the adhesion between the negative electrode active material particles and the adhesion between the negative electrode active material and the negative electrode collector. Specific examples of the binder may be polyvinylidene fluoride (PVDF), polyvinylidene fluoridehexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the negative electrode active material layer.

The negative electrode active material layer, for example, may be prepared by coating a negative electrode slurry including the negative electrode active material and optionally the binder and the conductive agent on the negative electrode collector and drying the coated negative electrode collector, or may be prepared by casting the negative electrode slurry on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an esterbased solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a doublebond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, an additive may be further included in the electrolyte. For example, as the additive, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be used alone or in a mixture thereof, but the present invention is not limited thereto. The additive may be included in an amount of 0.1 wt% to 10 wt%, preferably, 0.1 wt% to 5 wt% based on a total weight of the electrolyte.

As described above, since the lithium secondary battery including the positive electrode active material according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains.

### [Example and Comparative Examples: Preparation of Positive Electrode Active Materials]

### Comparative Example 1.

After 4 liters of distilled water was put in a co-precipitation reactor (capacity 20 L) and 100 mL of a 28 wt% aqueous ammonia solution was then added while the temperature was maintained at 50°C, a transition metal aqueous solution with a concentration of 3.2 mol/L, in which NiSO₄, CoSO₄, MnSO₄, and Al(OH)₃ were mixed such that a molar ratio of nickel:cobalt:manganese:aluminum was 85:10:4:1, and a 28 wt% aqueous ammonia solution were continuously added to the reactor at rates of 300 mL/hr and 42 mL/hr, respectively. Also, a 40 wt% sodium hydroxide solution was added in an amount such that a pH of a reaction solution was maintained at 11.0. Precursor particles were formed by performing a co-precipitation reaction for 20 hours. The precursor particles were separated, washed, and then dried in an over at 130°C to prepare a precursor.

The precursor synthesized by the co-precipitation reaction and LiOH were put into a Henschel mixer (700L) in amounts such that a molar ratio of (Ni+Co+Mn+Al):Li was 1:1.03, and mixing was performed at a center speed of 400 rpm for 20 minutes. The mixed powder was put into an alumina crucible having a size of 330 mm × 330 mm, and heat-treated at 890°C for 12 hours in an oxygen (O₂) atmosphere to prepare a Li[Ni_{0.85}Co_{0.10}Mn_{0.04}Al_{0.01}]O₂ lithium composite transition metal oxide.

The prepared lithium composite transition metal oxide was in the form of a single particle and/or a pseudo-single particle, wherein an average particle diameter (D₅₀) of primary particles was 1.0 µm and an average particle diameter (D₅₀) of secondary particles was 3.5 µm.

Thereafter, the prepared lithium composite transition metal oxide was dry mixed with 3 wt% of Co(OH)₂ based on a total weight of the lithium composite transition metal oxide. The mixture was heat-treated at 700°C for 5 hours in an air atmosphere to prepare a positive electrode active material having a cobalt coating layer formed thereon. In this case, a molar concentration of Co in the cobalt coating layer was 30,000 ppm based on the entire positive electrode active material, and an average particle diameter (D₅₀) of the positive electrode active material was 3.8 µm.

### Comparative Example 2.

A Li[Ni_{0.85}Co_{0.10}Mn_{0.04}Al_{0.01}]O₂ lithium composite transition metal oxide was prepared in the same manner as in Comparative Example 1.

Thereafter, the prepared lithium composite transition metal oxide was dry mixed with 0.05 wt% of H₃BO₃ based on a total weight of the lithium composite transition metal oxide. The mixture was heat-treated at 320°C for 5 hours in an air atmosphere to prepare a positive electrode active material having a boron coating layer formed thereon. In this case, a molar concentration of B in the boron coating layer was 460 ppm based on the entire positive electrode active material, and an average particle diameter (D₅₀) of the positive electrode active material was 4.0 µm.

### Comparative Example 3.

A Li[Ni_{0.85}Co_{0.10}Mn_{0.04}Al_{0.01}]O₂ lithium composite transition metal oxide was prepared in the same manner as in Comparative Example 1.

Thereafter, the prepared lithium composite transition metal oxide was dry mixed with 0.3 wt% of WO₃ based on a total weight of the lithium composite transition metal oxide. The mixture was heat-treated at 400°C for 10 hours in an air atmosphere to form a tungsten coating layer.

Thereafter, the lithium composite transition metal oxide having the tungsten coating layer formed thereon was dry mixed with 0.2 wt% of H₃BO₃ based on a total weight of the lithium composite transition metal oxide having the tungsten coating layer formed thereon. The mixture was heat-treated at 320°C for 8 hours in an air atmosphere to prepare a positive electrode active material having a boron coating layer formed on the tungsten coating layer. In this case, a molar concentration of W in the tungsten coating layer and a molar concentration of B in the boron coating layer were 400 ppm and 500 ppm based on the entire positive electrode active material, respectively, and an average particle diameter (D₅₀) of the positive electrode active material was 3.5 µm.

### Comparative Example 4.

A Li[Ni_{0.85}Co_{0.10}Mn_{0.04}Al_{0.01}]O₂ lithium composite transition metal oxide was prepared in the same manner as in Comparative Example 1.

Thereafter, the prepared lithium composite transition metal oxide was dry mixed with 3 wt% of Co(OH)₂ and 0.25 wt% of H₃BO₃ based on a total weight of the lithium composite transition metal oxide. The mixture was heat-treated at 650°C for 10 hours in an air atmosphere to prepare a positive electrode active material having a coating layer including both cobalt and boron formed thereon. In this case, molar concentrations of Co and B in the coating layer were 20,000 ppm and 500 ppm based on the entire positive electrode active material, respectively, and an average particle diameter (D₅₀) of the positive electrode active material was 4.0 µm.

### Example 1.

A Li[Ni_{0.85}Co_{0.10}Mn_{0.04}Al_{0.01}]O₂ lithium composite transition metal oxide was prepared in the same manner as in Comparative Example 1.

Thereafter, the prepared lithium composite transition metal oxide was dry mixed with 3 wt% of Co(OH)₂ based on a total weight of the lithium composite transition metal oxide. The mixture was heat-treated at 700°C for 5 hours in an air atmosphere to form a cobalt coating layer.

Thereafter, the lithium composite transition metal oxide having the cobalt coating layer formed thereon was dry mixed with 0.05 wt% of H₃BO₃ based on a total weight of the lithium composite transition metal oxide having the cobalt coating layer formed thereon. The mixture was heat-treated at 320°C for 5 hours in an air atmosphere to prepare a positive electrode active material having a boron coating layer formed on the cobalt coating layer. In this case, a molar concentration of Co in the cobalt coating layer and a molar concentration of B in the boron coating layer were 30,000 ppm and 500 ppm based on the entire positive electrode active material, respectively, and an average particle diameter (D₅₀) of the positive electrode active material was 4.1 µm.

### [Experimental Example: Initial Capacity and Life Characteristics Evaluation]

### (1) Preparation of Lithium Secondary Battery

Each of the positive electrode active materials prepared in Example 1 and Comparative Examples 1 to 4, a conductive agent (carbon black), and a PVDF binder were mixed in N-methylpyrrolidone in a weight ratio of 95:2:3 to prepare a positive electrode slurry. One surface of an aluminum current collector was coated with the positive electrode slurry, dried at 100°C, and then rolled to prepare each positive electrode.

A half-cell lithium secondary battery was prepared by preparing an electrode assembly by disposing a porous polyethylene separator between the positive electrode and a lithium metal negative electrode, disposing the electrode assembly in a battery case, and then injecting an electrolyte solution into the case. The electrolyte solution was prepared by dissolving 1 M LiPF₆ in a mixed organic solvent in which ethylene carbonate/dimethyl carbonate/diethyl carbonate were mixed in a volume ratio of 3:4:3.

### (2) Initial Charge and Discharge Evaluation

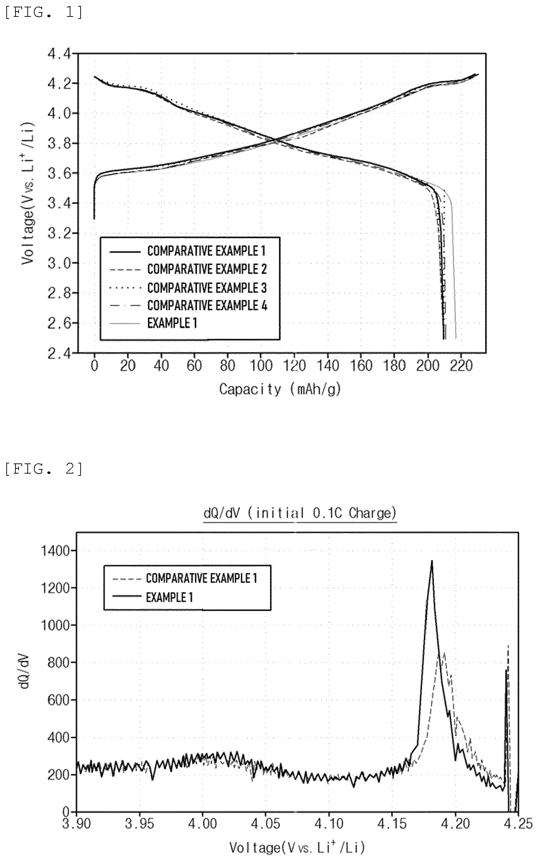

Each of the lithium secondary batteries, in which the positive electrode active materials of Example 1 and Comparative Examples 1 to 4 were used, was charged at 0.1 Crate to 4.25 V in a constant current/constant voltage (CCCV) mode at 25°C. Thereafter, each lithium secondary battery was discharged at a constant current of 0.1 C to 2.5 V to measure initial charge/discharge capacity. The results thereof are listed in FIG. 1 and Table 1 below.

Also, a graph of differential capacity (dQ/dV) according to voltage during the initial charge for the lithium secondary batteries, in which the positive electrode active materials of Example 1 and Comparative Example 1 were used, is illustrated in FIG. 2.

### (3) Life Characteristics Evaluation

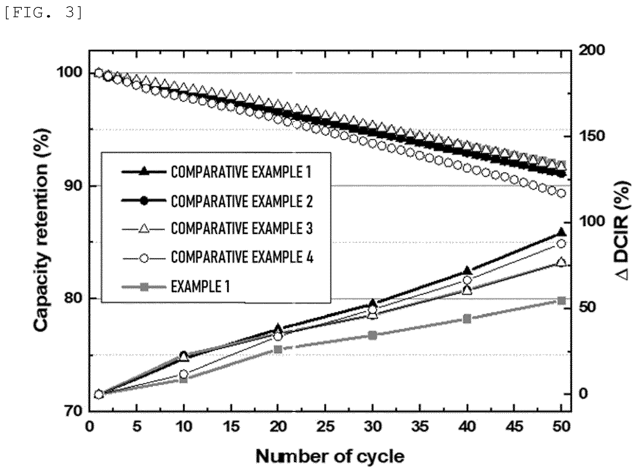

Each of the lithium secondary batteries, in which the positive electrode active materials of Example 1 and Comparative Examples 1 to 4 were used, was charged at 0.5 C rate to 4.25 V in a CCCV mode at 45°C, and discharged at a constant current of 1.0 C to 2.5 V. Capacity retention and resistance increase rate when the above charging and discharging were performed 50 times were measured, and the results thereof are listed in FIG. 3 and Table 1 below.

**[Table 1]**

| Positive electrode active material used | Initial charge capacity (mAh/g) | Initial discharge capacity (mAh/g) | Capacity retention (%) | Resistance increase rate (%) |
|---|---|---|---|---|
| Example 1 | 232.8 | 216.7 | 91.9 | 54.4 |
| Comparative Example 1 | 228.2 | 209.2 | 91.2 | 93.8 |
| Comparative Example 2 | 232.1 | 209.7 | 91.1 | 76.4 |
| Comparative Example 3 | 230.0 | 209.8 | 91.7 | 76.5 |
| Comparative Example 4 | 230.4 | 210.9 | 89.4 | 87.6 |

Through the results of FIG. 1, FIG. 3, and Table 1, it may be confirmed that the battery of Example 1 using the positive electrode active material, on which the Co coating layer and the B coating layer were sequentially formed, had higher initial charge and discharge capacity and higher capacity retention and lower resistance increase rate in a high-temperature environment than the batteries of Comparative Examples 1 to 4 using the positive electrode active materials on which the Co coating layer or the B coating layer was formed alone (Comparative Example 1 and 2), the W coating layer and the B coating layer were sequentially formed (Comparative Example 3), or the Co and B composite coating layer was formed (Comparative Example 4).

Through this, it may be confirmed that the formation of the coating layer in combination of Co and B on the lithium composite transition metal oxide in the form of a single particle or pseudo-single particle was the most effective in improving surface stability and durability and, among them, the sequential two-step coating was much more effective in improving the resistance increase rate than the simultaneous coating of Co and B in one step.

Also, through FIG. 2, it may be confirmed that a case (Example 1) where B was additionally coated after the Co coating had higher differential capacity (dQ/dV) around 4.15 V to 4.2 V than a case (Comparative Example 1) where Co was coated alone. This may be seen as an effect of the two phase reaction at the charging end by the additional B coating as described above.

## Claims

1. A method of preparing a positive electrode active material for a lithium secondary battery, comprising steps of:
(1) mixing a lithium composite transition metal oxide in a form of a single particle or pseudo-single particle with a cobalt-containing raw material and performing a heat treatment to form a cobalt coating layer on a surface of the lithium composite transition metal oxide; and
(2) mixing the lithium composite transition metal oxide having the cobalt coating layer formed thereon with a boron-containing raw material and performing a heat treatment to form a boron coating layer on the cobalt coating layer,
wherein the single particle is a particle composed of one primary particle, and
the pseudo-single particle is a particle composed of a secondary particle in which 30 or less primary particles are aggregated,
wherein the boron-containing raw material in step (2) is mixed in an amount of 0.03 wt% to 0.08 wt% based on a total amount of the lithium composite transition metal oxide having the cobalt coating layer formed thereon.

2. The method of claim 1, wherein the cobalt-containing raw material in step (1) is mixed in an amount of 1 wt% to 5 wt% based on a total amount of the lithium composite transition metal oxide.

3. The method of claim 1, wherein the heat treatment of step (1) is performed at 600°C to 800°C.

4. The method of claim 1, wherein the heat treatment of step (2) is performed at 250°C to 400°C.

5. The method of claim 1, wherein the lithium composite transition metal oxide is represented by Formula 1:
[Formula 1] LiₐNi_{1-x-y}CoₓM1_{y}M2_{w}O₂
in Formula 1,
1.0≤a≤1.5, 0≤x≤0.2, 0≤y≤0.2, 0≤w≤0.1, and 0<x+y≤0.4,
M1 is at least one selected from the group consisting of Mn and Al, and
M2 is at least one selected from the group consisting of Ba, Ca, Zr, Ti, Mg, Ta, Nb, and Mo.

6. The method of claim 5, wherein x, y, and w of Formula 1 satisfy 0.025≤x≤0.15, 0.025≤y≤0.15, 0≤w≤0.05, and 0.05≤x+y≤0.2, respectively.

7. A positive electrode active material for a lithium secondary battery, comprising:
a lithium composite transition metal oxide in a form of a single particle or pseudo-single particle,
a cobalt coating layer formed on the lithium composite transition metal oxide, and
a boron coating layer formed on the cobalt coating layer,
wherein the single particle is a particle composed of one primary particle, and
the pseudo-single particle is a particle composed of a secondary particle in which 30 or less primary particles are aggregated,
wherein a molar concentration of boron in the boron coating layer is in a range of 300 ppm to 700 ppm based on the entire positive electrode active material.

8. The positive electrode active material of claim 7, wherein the primary particle has an average particle diameter of 1 µm to 5 µm.

9. The positive electrode active material of claim 7, wherein the positive electrode active material has an average particle diameter of 3 µm to 10 µm.

10. The positive electrode active material of claim 7, wherein the lithium composite transition metal oxide is represented by Formula 1:
[Formula 1] LiₐNi_{1-x-y}CoₓM1_{y}M2_{w}O₂
wherein, in Formula 1, 1.0≤a≤1.5, 0≤x≤0.2, 0≤y≤0.2, 0≤w≤0.1, and 0<x+y≤0.4,
M1 is at least one selected from the group consisting of Mn and Al, and
M2 is at least one selected from the group consisting of Ba, Ca, Zr, Ti, Mg, Ta, Nb, and Mo.

11. A positive electrode comprising a positive electrode active material layer which includes the positive electrode active material of any one of claims 7 to 10.

12. A lithium secondary battery comprising the positive electrode of claim 11.

## Patentansprüche

1. Verfahren zur Herstellung eines Positivelektrodenaktivmaterials für eine Lithium-Sekundärbatterie, umfassend die folgenden Schritte:
(1) Mischen eines Lithium-Verbundübergangsmetalloxids in Form eines Einzelpartikels oder Pseudo-Einzelpartikels mit einem Kobalt-haltigen Rohmaterial und Durchführen einer Wärmebehandlung, um eine Kobaltbeschichtungsschicht auf einer Oberfläche des Lithium-Verbundübergangsmetalloxids zu bilden; und
(2) Mischen des Lithium-Verbundübergangsmetalloxids mit der darauf gebildeten Kobaltbeschichtungsschicht mit einem Bor-haltigen Rohmaterial und Durchführen einer Wärmebehandlung, um eine Borbeschichtungsschicht auf der Kobaltbeschichtungsschicht zu bilden,
wobei der Einzelpartikel ein Partikel ist, der aus einem Primärpartikel aufgebaut ist, und
der Pseudo-Einzelpartikel ein Partikel ist, der aus einem Sekundärpartikel, in dem 30 oder weniger Primärpartikel aggregiert sind, aufgebaut ist,
wobei der Bor-haltige Rohstoff in Schritt (2) in einer Menge von 0,03 Gew.-% bis 0,08 Gew.-%, bezogen auf die Gesamtmenge des Lithium-Verbundübergangsmetalloxids, auf dem die Kobaltbeschichtung gebildet ist, gemischt wird.

2. Verfahren nach Anspruch 1, bei dem der Kobalt-haltige Rohstoff in Schritt (1) in einer Menge von 1 Gew.-% bis 5 Gew.-%, bezogen auf die Gesamtmenge des Lithium-Verbundübergangsmetalloxids, gemischt wird.

3. Verfahren nach Anspruch 1, bei dem die Wärmebehandlung in Schritt (1) bei 600°C bis 800°C durchgeführt wird.

4. Verfahren nach Anspruch 1, bei dem die Wärmebehandlung in Schritt (2) bei 250°C bis 400°C durchgeführt wird.

5. Verfahren nach Anspruch 1, bei dem das Lithium-Verbundübergangsmetalloxid durch die Formel 1 dargestellt wird:
[Formel 1] LiₐNi_{1-x-y}CoₓM1_{y}M2_{w}O₂
in Formel 1,
1,0 ≤ a ≤ 1,5, 0 ≤ x ≤ 0,2, 0 ≤ y ≤ 0,2, 0 ≤ w ≤ 0,1 und 0 < x + y ≤ 0,4,
M1 ist mindestens eines, ausgewählt aus der Gruppe bestehend aus Mn und Al, und
M2 ist mindestens eines, ausgewählt aus der Gruppe bestehend aus Ba, Ca, Zr, Ti, Mg, Ta, Nb und Mo.

6. Verfahren nach Anspruch 5, bei dem x, y und w der Formel 1 jeweils folgendes erfüllen: 0,025 ≤ x ≤ 0,15, 0,025 ≤ y ≤ 0,15, 0 ≤ w ≤ 0,05 und 0,05 ≤ x + y ≤ 0,2.

7. Positivelektrodenaktivmaterial für eine Lithium-Sekundärbatterie, umfassend:
ein Lithium-Verbundübergangsmetalloxid in Form eines Einzelpartikels oder Pseudo-Einzelpartikels,
eine auf dem Lithium-Verbundübergangsmetalloxid gebildete Kobaltbeschichtungsschicht, und
eine auf der Kobaltbeschichtungsschicht gebildete Borbeschichtungsschicht,
wobei der Einzelpartikel ein Partikel ist, der aus einem Primärpartikel aufgebaut ist, und
der Pseudo-Einzelpartikel ein Partikel ist, der aus einem Sekundärpartikel, in dem 30 oder weniger Primärpartikel aggregiert sind, aufgebaut ist,
wobei eine molare Konzentration von Bor in der Borbeschichtungsschicht in einem Bereich von 300 ppm bis 700 ppm, bezogen auf das gesamte Positivelektrodenaktivmaterial, liegt.

8. Positivelektrodenaktivmaterial nach Anspruch 7, wobei der Primärpartikel einen durchschnittlichen Partikeldurchmesser von 1 µm bis 5 µm aufweist.

9. Positivelektrodenaktivmaterial nach Anspruch 7, wobei das Positivelektrodenaktivmaterial einen durchschnittlichen Partikeldurchmesser von 3 µm bis 10 µm aufweist.

10. Positivelektrodenaktivmaterial nach Anspruch 7, wobei das Lithium-Verbundübergangsmetalloxid durch Formel 1 dargestellt ist:
[Formel 1] LiₐNi_{1-x-y}CoₓM1_{y}M2_{w}O₂
in Formel 1,
1,0 ≤ a ≤ 1,5, 0 ≤ x ≤ 0,2, 0 ≤ y ≤ 0,2, 0 ≤ w ≤ 0,1 und 0 < x + y ≤ 0,4,
M1 ist mindestens eines, ausgewählt aus der Gruppe bestehend aus Mn und Al, und
M2 ist mindestens eines, ausgewählt aus der Gruppe bestehend aus Ba, Ca, Zr, Ti, Mg, Ta, Nb und Mo.

11. Positive Elektrode, die eine Positivelektrodenaktivmaterialschicht umfasst, die das Positivelektrodenaktivmaterial nach mindestens einem der Ansprüche 7 bis 10 enthält.

12. Lithium-Sekundärbatterie, die die positive Elektrode nach Anspruch 11 umfasst.

## Revendications

1. Procédé de préparation d'un matériau actif d'électrode positive pour une batterie secondaire au lithium, comprenant les étapes consistant à :
(1) mélanger un oxyde de métal de transition composite de lithium sous la forme d'une particule unique ou d'une particule pseudo-unique avec une matière première contenant du cobalt et la réalisation d'un traitement thermique pour former une couche de revêtement de cobalt sur une surface de l'oxyde de métal de transition composite de lithium ; et
(2) mélanger un oxyde de métal de transition composite de lithium sur lequel est formée la couche de revêtement de cobalt avec une matière première contenant du bore et la réalisation d'un traitement thermique pour former une couche de revêtement de bore sur la couche de revêtement de cobalt,
dans lequel la particule unique est une particule composée d'une seule particule primaire, et
la particule pseudo-unique est une particule composée d'une particule secondaire dans laquelle sont regroupées 30 particules primaires ou moins,
dans lequel la matière première contenant du bore de l'étape (2) est mélangée en une quantité de 0,03 % en poids à 0,08 % en poids sur la base d'une quantité totale de l'oxyde de métal de transition composite de lithium sur lequel est formée la couche de revêtement de cobalt.

2. Procédé selon la revendication 1, dans lequel la matière première contenant du cobalt de l'étape (1) est mélangée en une quantité de 1 % en poids à 5 % en poids sur la base d'une quantité totale de l'oxyde de métal de transition composite de lithium.

3. Procédé selon la revendication 1, dans lequel le traitement thermique de l'étape (1) est réalisé à une température allant de 600 °C à 800 °C.

4. Procédé selon la revendication 1, dans lequel le traitement thermique de l'étape (2) est réalisé à une température allant de 250 °C à 400 °C.

5. Procédé selon la revendication 1, dans lequel l'oxyde de métal de transition composite de lithium est représenté par la formule 1 :
[Formule 1] LiₐNi_{1-x-y}CoₓM1_{y}M2_{w}O₂
dans la formule 1,
1,0 ≤ a ≤ 1,5, 0 ≤ x ≤ 0,2, 0 ≤ y ≤ 0,2, 0 ≤ w ≤ 0,1 et 0 ≤ x + y ≤ 0,4,
M1 est au moins un sélectionné parmi le groupe consistant en Mn et Al, et
M2 est au moins un sélectionné parmi le groupe consistant en Ba, Ca, Zr, Ti, Mg, Ta, Nb et Mo.

6. Procédé selon la revendication 5, dans lequel x, y et w de la formule 1 satisfont respectivement 0,025 ≤ x ≤ 0,15, 0,025 ≤ y ≤ 0,15, 0 ≤ w ≤ 0,05 et 0,05 ≤ x + y ≤ 0,2.

7. Matériau actif d'électrode positive pour une batterie secondaire au lithium, comprenant :
un oxyde de métal de transition composite de lithium sous la forme d'une particule unique ou d'une particule pseudo-unique,
une couche de revêtement de cobalt formée sur l'oxyde de métal de transition composite de lithium, et
une couche de revêtement de bore formée sur la couche de revêtement de cobalt,
dans lequel la particule unique est une particule composée d'une seule particule primaire, et
la particule pseudo-unique est une particule composée d'une particule secondaire dans laquelle sont regroupées 30 particules primaires ou moins,
dans lequel une concentration molaire de bore dans la couche de revêtement de bore est dans une plage de 300 ppm à 700 ppm sur la base du matériau actif d'électrode positive entier.

8. Matériau actif d'électrode positive selon la revendication 7, dans lequel la particule primaire présente un diamètre de particule moyen de 1 µm à 5 µm.

9. Matériau actif d'électrode positive selon la revendication 7, dans lequel le matériau actif d'électrode positive présente un diamètre de particule moyen de 3 µm à 10 µm.

10. Matériau actif d'électrode positive selon la revendication 7, dans lequel l'oxyde de métal de transition composite de lithium est représenté par la formule 1 :
[Formule 1] LiₐNi_{1-x-y}COₓM1_{y}M2_{w}O₂
dans lequel, dans la formule 1, 1,0 ≤ a ≤ 1,5, 0 ≤ x ≤ 0,2, 0 ≤ y ≤ 0,2, 0 ≤ w ≤ 0,1 et 0 ≤ x + y ≤ 0,4,
M1 est au moins un sélectionné parmi le groupe consistant en Mn et Al, et
M2 est au moins un sélectionné parmi le groupe consistant en Ba, Ca, Zr, Ti, Mg, Ta, Nb et Mo.

11. Électrode positive comprenant une couche de matériau actif d'électrode positive qui inclut le matériau actif d'électrode positive selon l'une quelconque des revendications 7 à 10.

12. Batterie secondaire au lithium comprenant l'électrode positive selon la revendication 11.
